# EUROPÄISCHE PATENTSCHRIFT

(11) **EP 3 307 472 B1**
(45) Veröffentlichungstag und Bekanntmachung des Hinweises auf die Patenterteilung: **27.11.2019**
(21) Anmeldenummer: 16728934.7
(22) Anmeldetag: 10.06.2016
(51) Int. Cl.: B23K 26/08, B23K 26/142, B23K 26/16, B23K 26/38, B23K 37/04

(54) **VORRICHTUNG ZUM SCHNEIDEN VON BLECHPLATINEN AUS EINEM BLECHBAND**
APPARATUS FOR CUTTING METAL PLATES OUT OF A METAL STRIP
DISPOSITIF DE COUPE DE FLANS DE TÔLE DANS UNE BANDE DE TÔLE

(30) Priorität: 12.06.2015 DE 102015210848; 15.09.2015 DE 102015217639; 28.09.2015 DE 102015218650
(43) Veröffentlichungstag der Anmeldung: 18.04.2018
(73) Patentinhaber: Schuler Pressen GmbH, 91093 Heßdorf (DE)
(72) Erfinder: SUMMERER, Matthias, 90518 Altdorf (DE); SEITZ, Alexander, 91054 Erlangen (DE)
(74) Vertreter: Dr. Gassner & Partner mbB
(86) Internationale Anmeldenummer: PCT/EP2016/063315
(87) Internationale Veröffentlichungsnummer: WO 2016/198610

(56) Entgegenhaltungen:
- EP-A1- 1 586 407
- WO-A2-2007/028576
- DE-A1- 19 642 159
- DE-A1-102011 054 361

## Beschreibung

Die Erfindung betrifft eine Vorrichtung zum Schneiden von Blechplatinen aus einem Blechband nach dem Oberbegriff des Anspruchs 1.

Eine solche Vorrichtung ist aus der EP 1 586 407 A1 bekannt.

Bei der bekannten Vorrichtung ist in einer von einer Laserschneidvorrichtung weg weisenden Abführrichtung ein Staubabführschacht vorgesehen, an dem ein Staubauffangbehälter befestigt ist. Der Staubabführschacht und der daran angebrachte Staubauffangbehälter werden zum Abführen und Auffangen von beim Laserschneiden von Blech anfallendem Schneidstaub bzw. heißen Schlackepartikeln mitlaufend in einer Transportrichtung des Blechbands mit der Laserschneidvorrichtung hin und her bewegt. - Bei der bekannten Vorrichtung ist nachteilig, dass Schneidstaub an einer der Abführrichtung zugewandten Unterseite eines aus dem Blechband geschnittenen Blechs anhaftet oder damit verschweißt. Der Schneidstaub muss nachfolgend vom Blech entfernt werden. Das ist aufwändig.

Aufgabe der Erfindung ist es, die Nachteile nach dem Stand der Technik zu beseitigen. Es soll insbesondere eine einfach herstellbare Vorrichtung angegeben werden, mit der Bleche ohne wesentliche Anhaftungen von Schneidstaub herstellbar sind. Ein weiteres Ziel der Erfindung ist es, den Schritt des Entfernens von Schneidstaub vom Blech zu vermeiden.

Diese Aufgabe wird durch die Merkmale des Anspruchs 1 gelöst. Zweckmäßige Ausgestaltungen der Erfindung ergeben sich aus den Merkmalen der abhängigen Ansprüche.

Nach Maßgabe der Erfindung wird vorgeschlagen, dass zumindest eine Stützleiste und/oder die Staubabführeinrichtung mit einer Belüftungseinrichtung zur Belüftung des Spalts versehen ist/sind.

Durch das Vorsehen einer Belüftungseinrichtung kann eine sich beim Abführen des Schneidstaubs durch den Abführschacht ausbildende Rückströmung in Richtung der Unterseite des geschnittenen Blechs auf einfache Weise vermieden werden. Der Schneidstaub wird im Wesentlichen vollständig in die Staubabführeinrichtung abgeführt. Es ist nicht erforderlich, Schneidstaub bzw. Schlackepartikeln von der Unterseite des geschnittenen Blechs zu entfernen.

Die erfindungsgemäße Belüftung des Spalts kann "passiv" oder "aktiv" erfolgen. Bei der passiven Belüftung wird Luft durch die Belüftungseinrichtung angesaugt. Das Ansaugen der Luft erfolgt z. B. durch einen Venturi-Effekt, der sich infolge der in Abführrichtung gerichteten, durch das Schneidgas bedingten Schneidgasströmung ausbildet. - Bei der "aktiven" Belüftung wird Luft mittels der Belüftungseinrichtung in Abführrichtung geblasen und/oder gesaugt. Es bildet sich in diesem Fall in Abführrichtung eine höhere Strömungsgeschwindigkeit als bei der passiven Belüftung aus. Die Strömungsgeschwindigkeit kann in diesem Fall auch gesteuert oder geregelt werden. - Zur aktiven Belüftung kann insbesondere ein Gebläse zum Zu- oder Abführen von Luft vorgesehen sein.

Die Belüftungseinrichtung umfasst Belüftungskanäle, welche in einer der Laserschneideinrichtung zugewandten Stützfläche der Stützleiste vorgesehen sind. Eine solche Belüftungseinrichtung lässt sich besonders einfach und kostengünstig herstellen.

Vorteilhafterweise erstrecken sich die Belüftungskanäle über eine sich in Transportrichtung erstreckende Länge der Stützfläche. Die Belüftungskanäle können insbesondere parallel und/oder schräg zur Transportrichtung verlaufen. Sie können einen gebogenen oder abgewinkelten Verlauf aufweisen.

Die Staubabführeinrichtung kann einen Staubauffangbehälter und/oder einen sich von zumindest einer der Stützleisten erstreckenden Staubabführschacht umfassen. Das ermöglicht ein gezieltes Abführen und Auffangen des Schneidstaubs.

Die Belüftungseinrichtung kann auch Belüftungsdurchbrüche umfassen, welche zumindest eine der Stützleisten und/oder den Staubabführschacht durchgreifen. Auch solche Belüftungsdurchbrüche, z. B. Bohrungen oder Schlitze, ermöglichen eine zusätzliche Belüftung unterhalb einer Unterseite des Blechbands und eines daraus geschnittenen Blechs, derart, dass sich eine unerwünschte Rückströmung des beim Schneiden des Blechbands gebildeten Schneidstaubs nicht ausbildet.

Die Belüftungskanäle und/oder Belüftungsdurchbrüche dienen vorzugsweise einer passiven Belüftung des Spalts. Sie können aber auch Bestandteil einer aktiven Belüftungseinrichtung sein.

Nach einer weiteren Ausgestaltung der Erfindung weist der Staubabführschacht einen sich in der Abführrichtung erweiternden Querschnitt auf. Auch das wirkt der Ausbildung einer unerwünschten Rückströmung von Schneidstaub in Richtung der Unterseite des Blechs entgegen.

Die Stützleisten und/oder der Staubabführschacht sind zweckmäßigerweise aus Kupfer oder einer im Wesentlichen Kupfer enthaltenden Legierung hergestellt. Es hat sich gezeigt, dass die Anhaftung von Schneidstaub an Kupferwerkstoffen besonders gering ist. Belüftungskanäle und/oder Belüftungsdurchbrüche setzen in diesem Fall auch bei langen Standzeiten nicht mit Schneidstaub zu. Es kann damit stets eine ordnungsgemäße Belüftung gewährleistet werden.

Der Staubabführschacht kann lediglich an einer der beiden Stützleisten angebracht sein. In diesem Fall kann der Staubabführschacht auf einfache Weise mitlaufend mit dem Schlitz bewegt werden. Abgesehen davon kann die Breite des Schlitzes bei Bedarf geändert werden.

Der Staubabführschacht ist vorteilhafterweise durch zwei sich in Abführrichtung ersteckende Wände gebildet. Die Wände erstrecken sich z. B. im Wesentlichen in eine Richtung senkrecht zur Transportrichtung. Zumindest eine der Wände kann an einer der Stützleisten angebracht sein. In den seitlichen Randbereichen des Staubabführkanals können mit dem Gebläse verbundene Durchbrüche zur Ausbildung eines Luftschwerts vorgesehen sein. Damit kann vermieden werden, dass Schneidstaub in den Randbereichen des Blechbands auf eine Oberseite desselben bzw. auf die Oberseite daraus geschnittener Bleche gelangt. Statt des Luftschwerts können auch Seitenwände vorgesehen sein, welche etwa in Transportrichtung verlaufen und an zumindest einer der beiden einander gegenüberliegenden Wände angebracht sind.

Bei der erfindungsgemäßen Vorrichtung ist vorteilhafterweise dem ersten Stützmittel stromaufwärts ein erstes Fördermittel vorgeordnet ist. Ferner kann dem zweiten Stützmittel stromabwärts ein zweites Fördermittel nachgeordnet sein. Das ermöglicht einen Transport, insbesondere einen kontinuierlichen Transport, des Blechbands über den zwischen den Stützleisten gebildet Schlitz. Das erste Fördermittel kann z. B. eine Walzenrichtmaschine umfassen. Das erste und/oder das zweite Fördermittel können/kann auch ein Förderband und/oder einen Rollenförderer umfassen. - Das erste Stützmittel ist vorteilhafterweise stromabwärts einer endständigen Walze an einem ersten Förderband und das zweite Stützmittel stromaufwärts einer weiteren endständigen Walze an einem zweiten Förderband angebracht, wobei die beiden endständigen Walzen einander gegenüberliegend angeordnet sind. Die beiden gegenüberliegenden Walzen sind vorteilhafterweise in einem vorgegebenen Abstand voneinander angeordnet und in dieser Anordnung in Transportrichtung hin und her bewegbar.

Nach einer vorteilhaften Ausgestaltung ist der Staubabführschacht mit dem Staubauffangbehälter verbunden oder Bestandteil desselben. Infolgedessen ist der Staubauffangbehälter also zumindest mit dem ersten oder dem zweiten Stützmittel gekoppelt. Der Staubauffangbehälter wird also ebenfalls mitlaufend mit der Laserschneidvorrichtung in der Transportrichtung hin und her bewegt. Durch das Vorsehen eines mitlaufenden und weitgehend geschlossenen Staubauffangbehälters kann weiter einem unerwünschten Anhaften von Schneidstaub an einer Unterseite des Blechbands entgegengewirkt werden.

Nach einer weiteren Ausgestaltung der Erfindung ist eine mit dem Staubauffangbehälter verbundene Absaugvorrichtung zum Erzeugen einer von einer Eintrittsöffnung des Staubauffangbehälters zum Behälterinnenraum hin gerichteten Absaugströmung vorgesehen. Eine Absaugströmung wird vorteilhafterweise so gewählt, dass damit Luft durch die Belüftungskanäle und/oder Belüftungsdurchbrüche zum Behälterinnenraum gesaugt wird. Die Absaugströmung wird insbesondere so stark gewählt, dass sich im Staubauffangbehälter keine Rückströmung ausbildet, welche einem Eintritt einer von einer Schneiddüse der Laserschneidvorrichtung ausgehenden Schneidgasströmung entgegenwirkt.

Ferner kann eine Flüssigkeitszuführeinrichtung zum Zuführen von Flüssigkeit zum Behälterinnenraum vorgesehen sein. Damit kann in den Staubauffangbehälter eintretender heißer Schneidstaub bzw. heiße Schlackepartikel gekühlt werden. Es kann ein Verkleben der Schlackepartikel mit einer Behälterinnenwand vermieden werden.

Die Flüssigkeitszuführeinrichtung kann zumindest eine in der Nähe der Eintrittsöffnung des Staubauffangbehälters angebrachte Düse zur Erzeugung eines Flüssigkeitssprays aufweisen. Das ermöglicht eine besonders effiziente Abkühlung von in den Staubauffangbehälter eintretenden Schlackepartikeln.

Nach einer weiteren Ausgestaltung ist an einer dem Behälterinnenraum zugewandten Innenseite eine einen kommunizierenden Porenraum aufweisende Schicht zur Aufnahme von von Flüssigkeitszuführeinrichtung zugeführter Flüssigkeit vorgesehen. Die poröse Schicht kann beispielsweise aus einem Sintermetall, aus Keramik, aus einem Glasfaservlies oder dgl. hergestellt sein. Indem die poröse Schicht mit Flüssigkeit infiltriert ist, wird einem Anhaften heißer Schlackepartikel an der Innenseite des Staubauffangbehälters entgegengewirkt.

Nach einer weiteren vorteilhaften Ausgestaltung erstreckt sich der Staubauffangbehälter über eine gesamte Breite des Blechbands in y-Richtung. Die Eintrittsöffnung des Staubauffangbehälters ist zweckmäßigerweise schlitzförmig ausgebildet und erstreckt sich in y-Richtung. Der Staubauffangbehälter kann insbesondere rohrförmig ausgebildet sein, wobei eine Rohrachse des Staubauffangbehälters sich etwa senkrecht zur Strahlrichtung des Laserstrahls erstreckt.

Es kann eine sich in y-Richtung erstreckende Blende mit einer auf die schlitzförmige Eintrittsöffnung ausgerichteten Blendenöffnung vorgesehen sein, welche mittels einer Bewegungseinrichtung in Ausrichtung auf den Laserstrahl in y-Richtung hin- und herbewegbar ist. Bei der Blende kann es sich beispielsweise um ein die schlitzförmige Eintrittsöffnung im Wesentlichen überdeckendes Edelstahlband handeln, welches als Blendenöffnung einen Durchbruch aufweist. Durch das Vorsehen einer in y-Richtung hin- und herbewegbaren Blende kann verhindert werden, dass ein bereits im Staubauffangbehälter befindlicher Schneidstaub durch die Schneidgasströmung aus der Eintrittsöffnung herausgeblasen wird.

Eine Achse des, vorzugsweise rohrförmigen, Staubauffangbehälters kann sich auch etwa parallel zur Strahlrichtung des Laserstrahls sich erstrecken. In diesem Fall kann eine Bewegungseinrichtung zum mitlaufenden Hin- und Herbewegen des Staubauffangbehälters in y-Richtung vorgesehen sein, derart, dass der Laserstrahl stets in Ausrichtung mit der Eintrittsöffnung des Staubauffangbehälters ist. Bei dieser Ausgestaltung kann auf das Vorsehen einer Blende sowie eines Staubabführschachts verzichtet werden. Der Staubauffangbehälter ist in diesem Fall zweckmäßigerweise mit einem Sauggebläse zur Erzeugung einer in Abführrichtung gerichteten Absaugströmung verbunden.

In y-Richtung können auch mehrere nebeneinander angeordnete Staubauffangbehälter vorgesehen sein, deren Achsen etwa parallel zur Strahlrichtung des Lasers verlaufen. Falls ein Staubauffangbehälter mit Schneidstaub verstopft ist, kann ein weiterer Staubauffangbehälter mitlaufend auf die Laserschneidvorrichtung ausgerichtet werden.

Vorteilhafterweise weist der Staubauffangbehälter eine Abführöffnung zum Abführen von Schneidstaub oder von mit Schneidstaub beladener Flüssigkeit auf. Stromabwärts des Staubabführschachts oder der Abführöffnung kann ein stationärer Auffangbehälter vorgesehen sein.

Nachfolgend werden Ausführungsbeispiele der Erfindung anhand der Zeichnungen näher erläutert. Es zeigen:
- Fig. 1: eine perspektivische Teilansicht einer ersten Vorrichtung,
- Fig. 2: eine perspektivische Teilansicht einer zweiten Vorrichtung,
- Fig. 3: eine perspektivische Teilansicht einer dritten Vorrichtung,
- Fig. 4: eine Schnittansicht durch eine vierte Vorrichtung,
- Fig. 5a: eine perspektivische Teilansicht einer fünften Vorrichtung,
- Fig. 5b: eine Detailansicht gemäß Fig. 5a,
- Fig. 6: eine perspektivische Teilansicht einer sechsten Vorrichtung,
- Fig. 7: einen Vertikalschnitt gemäß Fig. 6 entlang des Spalts,
- Fig. 8: eine perspektivische Teilansicht einer siebten Vorrichtung,
- Fig. 9: einen Vertikalschnitt gemäß Fig. 8 entlang des Spalts,
- Fig. 10: eine Schnittansicht durch eine achte Vorrichtung,
- Fig. 11: eine Draufsicht auf die achte Vorrichtung,
- Fig. 12: eine perspektivische Ansicht einer neunten Vorrichtung und
- Fig. 13: eine Schnittansicht der neunten Vorrichtung.

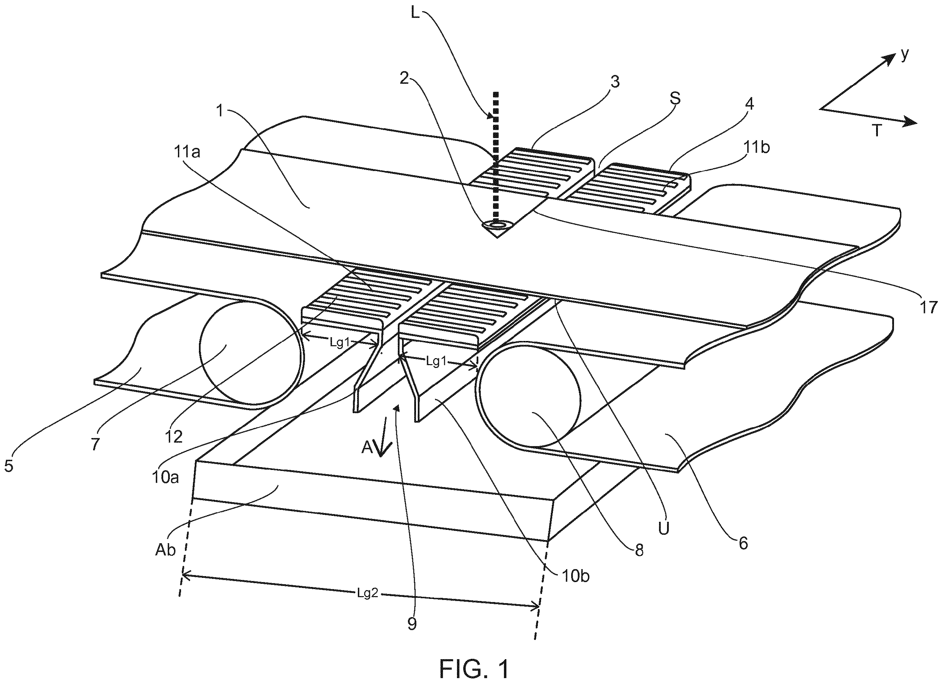

Bei der in Fig. 1 gezeigten ersten Vorrichtung zum Schneiden von Blechplatinen aus einem Blechband 1 ist eine Transportrichtung des Blechbands 1 mit dem Bezugszeichen T bezeichnet. Mit dem Bezugszeichen 2 ist eine Schneiddüse einer hier nicht näher gezeigten Laserschneidvorrichtung bezeichnet. Die Schneiddüse 2 ist mittels einer herkömmlichen Bewegungsvorrichtung in Transportrichtung T und in eine dazu senkrechte y-Richtung bewegbar, so dass aus dem Blechband 1 Bleche mit einer vorgegebenen Kontur ausschneidbar sind. Dabei kann das Blechband 1 kontinuierlich in Transportrichtung T bewegt werden.

Die Schneiddüse 2 ist so ausgebildet, dass dadurch Schneidgas und ein Laserstrahl L auf das Blechband 1 geführt werden können. Das Blechband 1 ist im Schneidbereich auf eine erste Stützleiste 3 und eine gegenüberliegend angeordnete zweite Stützleiste 4 abgestützt. Die erste 3 und die zweite Stützleiste 4 erstrecken sich etwa in y-Richtung. Zwischen den Stützleisten 3, 4 ist ein Spalt S gebildet, durch den ein Laserstahl L hindurch läuft. Die erste 3 und die zweite Stützleiste 4 sind mittels einer hier nicht näher gezeigten herkömmlichen Vorrichtung mitlaufend mit der Schneiddüse 2 bewegbar. Zu diesem Zweck kann die erste Stützleiste 3 mit einem ihr stromaufwärts vorgeordneten ersten Fördermittel, z. B. einem ersten Bandförderer 5, verbunden sein. In ähnlicher Weise kann die zweite Stützleiste 4 mit einem ihr stromabwärts nachgeordneten zweiten Fördermittel, z. B. einem zweiten Bandförderer 6, verbunden sein. Einander gegenüberliegende erste 7 und zweite Umlenkwalzen bzw. -rollen 8 der Bandförderer 5, 6 können in herkömmlicher Weise unter Ausbildung des Spalts S mitlaufend mit der Schneiddüse 2 der Laserschneidvorrichtung bewegbar sein. Es wird dazu beispielhaft auf die DE 10 2004 034 256 A1 verwiesen.

Mit dem Bezugszeichen 9 ist allgemein ein Abführschacht bezeichnet, welcher sich in eine von einer Unterseite U des Blechbands 1 wegweisende Abführrichtung A erstreckt. Der Abführschacht 9 ist hier durch zwei sich in die Abführrichtung A ersteckende Wände 10a, 10b gebildet. Die erste Wand 10a ist an der ersten Stützleiste 3 und die zweite Wand 10b an der zweiten Stützleiste 4 angebracht. Die Wände 10a, 10b erstrecken sich in y-Richtung. Sie sind so ausgestaltet, dass eine Spaltweite des dazwischen gebildeten Spalts S sich in Abführrichtung A erweitert. Die Stützleisten 3, 4 können auch in einem Stück mit der jeweiligen Wand 10a, 10b gebildet sein.

Es ist auch möglich, dass beide Wände 10a, 10b über in Transportrichtung T sich erstreckende Verbindungswände (hier nicht gezeigt) miteinander verbunden sind. Derartige Verbindungswände sind zweckmäßigerweise in y-Richtung seitlich außerhalb eines Schneidbereichs vorgesehen. In diesem Fall kann der Abführschacht 9 mittels lediglich einer der beiden Wände 10a oder 10b an der dazu korrespondierenden Stützleiste 3 oder 4 angebracht sein.

Die erste 3 und die zweite Stützleiste 4 weisen jeweils eine der Schneiddüse 2 zugewandte Stützfläche 11a, 11b auf. Jede der Stützflächen 11a, 11b ist mit etwa sich in Transportrichtung T erstreckenden Belüftungskanälen 12 versehen. Die Belüftungskanäle 12 erstrecken sich hier über eine gesamte erste Länge Lg1 der Stützleisten 3, 4, so dass bei auf den Stützflächen 11a, 11b aufliegendem Blechband 1 durch die Belüftungskanäle 12 Luft dem Spalt S zugeführt werden kann.

Mit dem Bezugszeichen Ab ist ein Auffangbehälter bezeichnet, welcher dem Abführschacht 9 in der Abführrichtung A nachgeordnet ist. Der Auffangbehälter Ab ist nicht mit dem Abführschacht 9 verbunden, d. h. der Auffangbehälter Ab ist relativ zum Abführschacht 9 feststehend. Eine zweite Länge Lg2 des Auffangbehälters Ab erstreckt sich in Transportrichtung T zumindest über einen vorgegebenen Bewegungsbereich des mitlaufend bewegten Abführschachts 9. Wegen des feststehenden Auffangbehälters Ab können die mitlaufend zu bewegenden Massen gering gehalten werden. In diesem Fall kann der Spalt S besonders schnell und genau mit dem Laserstahl L bewegt werden.

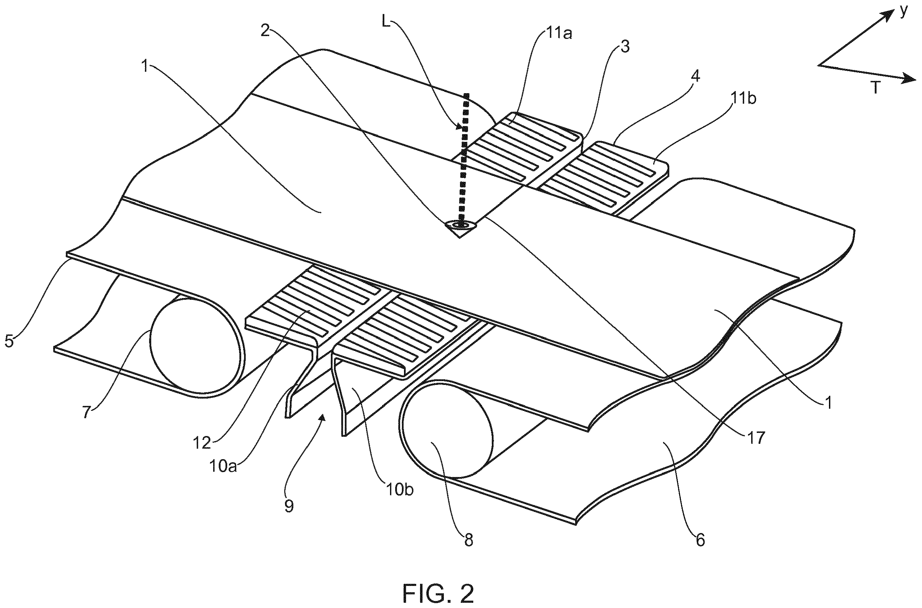

Bei der in Fig. 2 gezeigten zweiten Vorrichtung verlaufen die Belüftungskanäle 12 schräg zur Transportrichtung T. Sie erstecken sich über die gesamte erste Länge Lg1 der ersten 11a und der zweiten Stützfläche 11b der Stützleisten 3, 4.

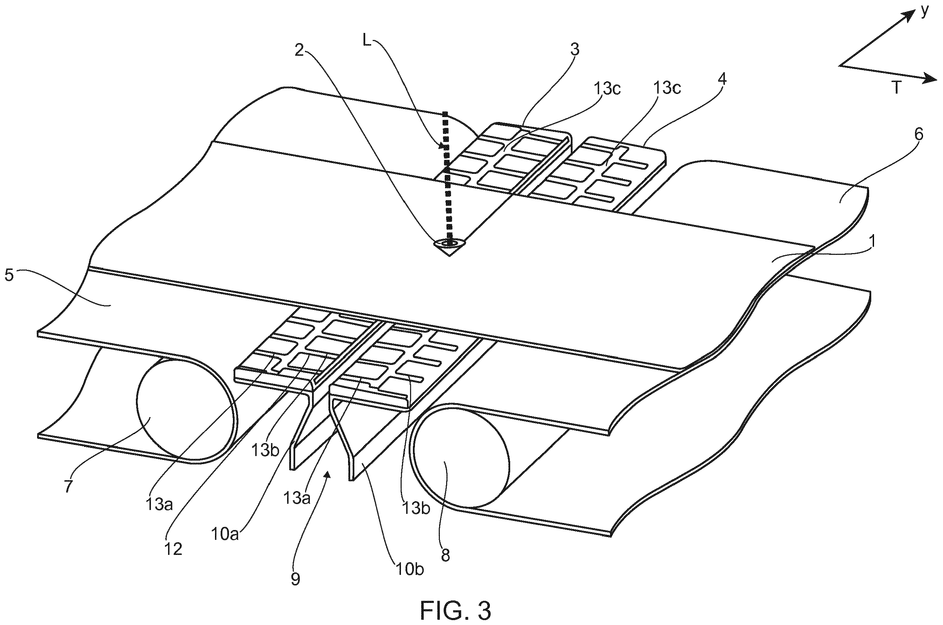

Bei der in Fig. 3 gezeigten dritten Vorrichtung sind die Belüftungskanäle 12 jeweils in zwei Abschnitte 13a, 13b gegliedert, die in Transportrichtung T versetzt zueinander angeordnet sind. Die Abschnitte 13a, 13b sind über einen etwa in y-Richtung verlaufenden Verbindungskanal 13c miteinander verbunden.

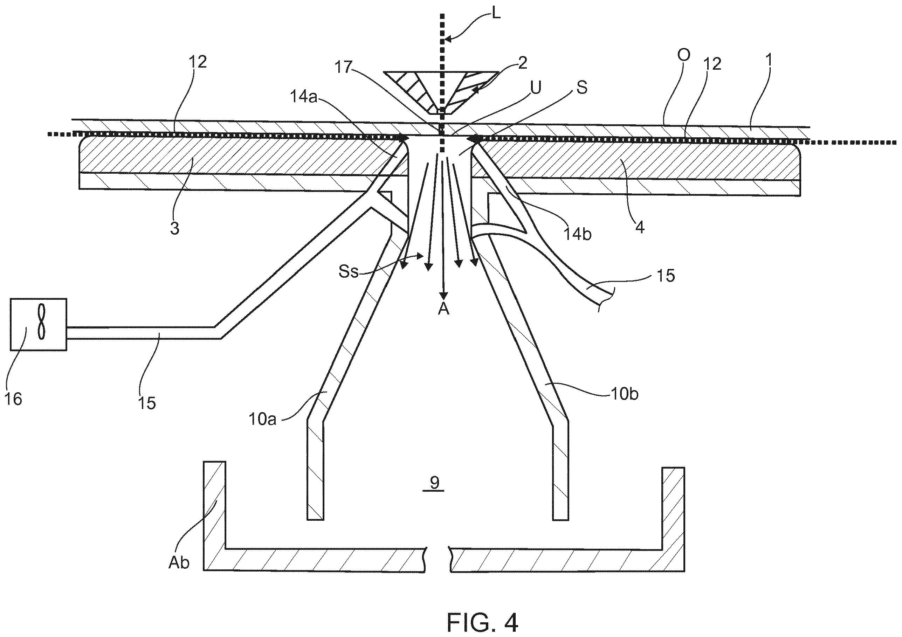

Bei der in Fig. 4 gezeigten vierten Vorrichtung ist die erste Stützleiste 3 mit einem ersten Belüftungsdurchbruch 14a und die zweite Stützleiste 4 mit einem zweiten Belüftungsdurchbruch 14b versehen.

Die Belüftungsdurchbrüche 14a, 14b können über hier lediglich schematisch angedeutete Leitungen 15 mit einem ebenfalls schematisch angedeuteten Gebläse 16 verbunden sein.

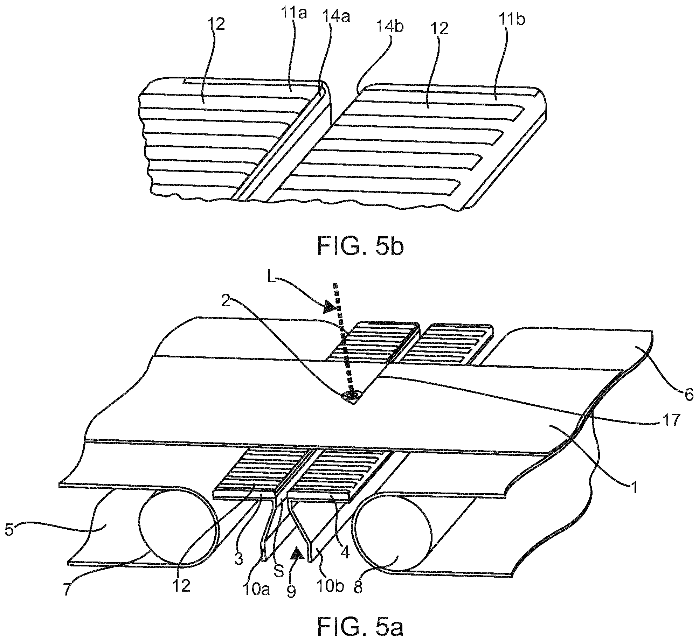

Bei der in Fig. 5a und 5b gezeigten fünften Vorrichtung weisen die Stützleisten 3, 4 Belüftungskanäle 12 - wie in Fig. 1 gezeigt - auf. Zusätzlich sind in einem Randbereich der Stützleisten 3, 4 Belüftungsdurchbrüche 14a, 14b vorgesehen.

Die Funktion der Vorrichtung wird nunmehr näher erläutert.

Aus der Schneiddüse 2 tritt beim Schneiden des Blechbands 1 Schneidgas aus. Es bildet sich eine Schneidgasströmung aus, die durch den einen Schnitt 17 im Blechband 1 in Richtung des Spalts S gerichtet ist. Mit dem in Abführrichtung A strömenden Schneidgas wird beim Schneiden gebildeter Schneidstaub Ss in den Abführschacht 9 abgeführt. Die Schneidgasströmung bewirkt einen Venturi-Effekt, durch den Luft durch die Belüftungskanäle 12 und/oder die Belüftungsdurchbrüche 14a, 14b angesaugt wird. Infolge dessen wird die Ausbildung einer in Richtung der Unterseite U des Blechbands 1 gerichteten Rückströmung vermieden. Schneidstaub Ss wird nicht gegen die Unterseite U transportiert.

Durch die Belüftungsdurchbrüche 14a, 14b kann mittels des Gebläses 16 über die Leitungen 15 auch Druckluft in den Schneidpalt S geblasen werden. Damit kann noch effektiver die Ausbildung einer Rückströmung gegen die Unterseite U vermieden werden. Ein Massefluss der insbesondere durch die Belüftungsdurchbrüche 14a, 14b zugeführten Luft kann z. B. in Abhängigkeit einer Spaltweite des Spalts S gesteuert werden. Dazu kann zumindest ein Steuerventil dem Gebläse 16 nachgeschaltet sein (hier nicht gezeigt).

Die Belüftungsdurchbrüche 14a, 14b können auch in y-Richtung seitlich außerhalb eines Schneidbereichs angeordnet sein. Damit kann in diesem Bereich mittels Druckluft ein Luftschwert erzeugt werden. Mit dem Luftschwert kann ein seitliches Austreten von Schneidstaub Ss und eine Verschmutzung einer der Unterseite U des Blechbands 1 gegenüberliegenden Oberseite O vermieden werden. Verbindungswände sind in diesem Fall nicht erforderlich.

Nach einer weiteren in den Figuren nicht gesondert dargestellten Ausgestaltung kann es auch sein, dass stromabwärts des Spalts S, insbesondere im Bereich der ersten 10a sowie der zweiten Wand 10b eine Kühlfalle vorgesehen ist. Die Kühlfalle kann beispielsweise gebildet sein durch eine Vielzahl von in der 10a und/oder der zweiten Wand 10b vorgesehene Düsen, durch welche Kaltluft, insbesondere trockene Kaltluft, oder kalter Stickstoff, welcher zweckmäßigerweise durch Verdampfung von Flüssigstickstoff hergestellt ist, eingeblasen wird. Die Kühlfalle kann selbstverständlich auch anders ausgestaltet sein. Beispielsweise können ein oder mehrere in Querrichtung Q verlaufende Leitungen im Bereich der Wände 10a, 10b oder des Abführschachts 9 vorgesehen sein, welche mit einem Kühlmittel durchströmt werden.

Indem der Schneidstaub Ss stromabwärts in oder durch eine Kühlfalle geführt wird, kühlen sich die Schneidstaubpartikel ab. Es hat sich gezeigt, dass kalte Schneidstaubpartikel eine geringere Neigung zum Anhaften an der Unterseite U des Blechbands haben.

Es kann auch sein, dass die Belüftungseinrichtung 12, 13a, 13b, 13c, 14a, 14b weggelassen wird und stattdessen die Vorrichtung zum Schneiden von Blechplatinen lediglich mit einer stromabwärts des Spalts S angeordneten Kühlfalle versehen ist.

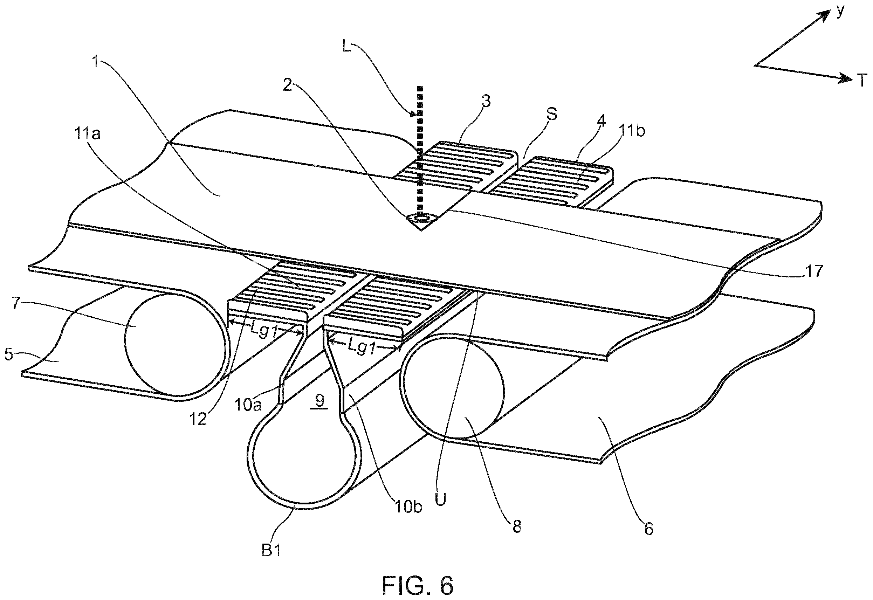

Bei der in Fig. 6 gezeigten sechsten Vorrichtung sind die Wände 10a, 10b des Abführschachts 9 mit einem rohrförmig ausgebildeten ersten Behälter B1 verbunden. Eine Achse des rohrförmig ausgebildeten ersten Behälters B1 erstreckt sich etwa parallel zum Spalt S. In diesem Fall sind die erste 3 und die zweite Stützleiste 4 entweder mit einer ersten oder mit einer zweiten Fördervorrichtung gekoppelt, so dass Stützleisten 3, 4 gemeinsam mit dem ersten Behälter B1 in Transportrichtung T hin und her bewegbar sind.

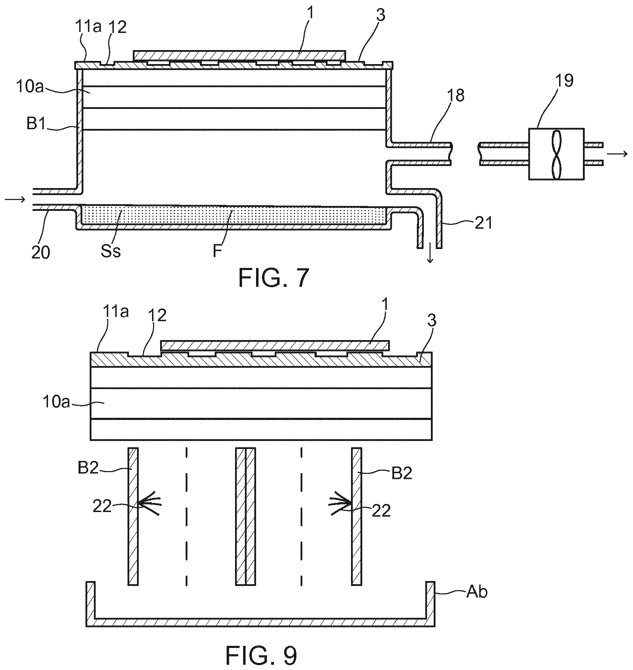

Wie insbesondere aus Fig. 7 ersichtlich ist, ist der erste Behälter B1 mit einer Absaugleitung 18 versehen, welche an ein Sauggebläse 19 angeschlossen ist. Ferner ist eine Flüssigkeitszuführleitung 20 vorgesehen, welche mit einer (hier nicht gezeigten) Pumpe oder dgl. zum Zuführen von Flüssigkeit F, insbesondere Wasser, versehen sein kann. Mit dem Bezugszeichen 21 ist eine Flüssigkeitsabführleitung bezeichnet.

Die Funktion der sechsten Vorrichtung ist Folgende:
Der beim Schneiden mittels der Schneidgasströmung in den Spalt S gelangende Schneidstaub Ss wird insbesondere durch die Wirkung des Sauggebläses 19 in den ersten Behälter B1 gesaugt. Der Schneidstaub Ss wird durch die im ersten Behälter B1 befindliche Flüssigkeit F abgekühlt und durch die Flüssigkeitsabführleitung 21 abgeführt.

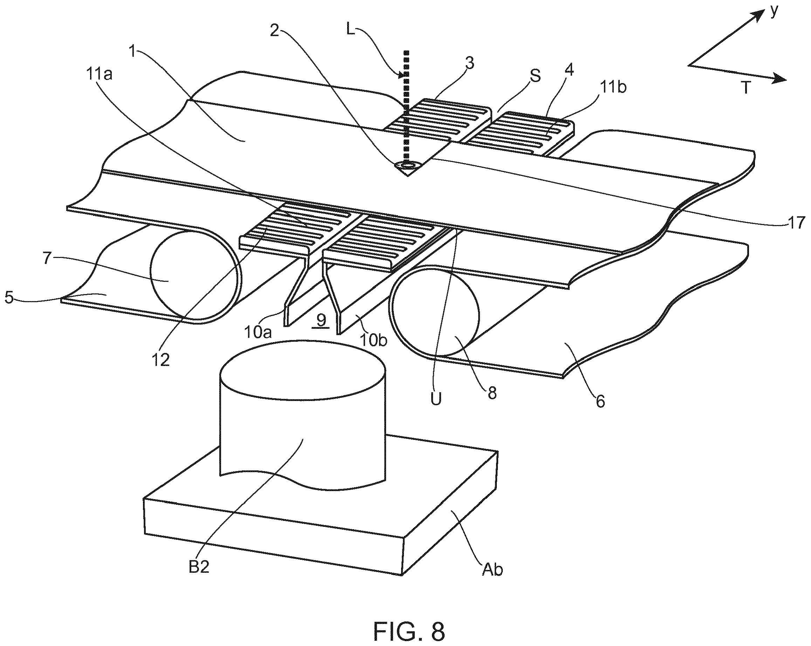

Die Fig. 8 und 9 zeigen eine siebte Vorrichtung. Die siebte Vorrichtung weist stromabwärts des Abführschachts 9 einen oder mehrere rohrartige zweite Behälter B2 auf. Eine Achse des rohrartigen zweiten Behälters B2 verläuft etwa parallel zur Achse des Laserstrahls L. Die zweite Behälter B2 ist sowohl in Transportrichtung T als auch in y-Richtung hin und her bewegbar, und zwar derart, dass der Laserstrahl L genau in den zweiten Behälter B1 eintritt. Zum hin und her Bewegen des zweiten Behälters in Transportrichtung T kann der beispielsweise in einer sich in y-Richtung erstreckenden Führung geführt sein, welche an die erste 3 oder die zweite Stützleiste 4 gekoppelt ist. Zum hin und her Bewegen in y-Richtung ist eine separate Bewegungseinrichtung (hier nicht gezeigt) vorgesehen, welche steuerungstechnisch mit einer Einrichtung zum Bewegen der Laserschneidvorrichtung gekoppelt ist.

Wie insbesondere aus Fig. 9 ersichtlich ist, können in y-Richtung auch mehrere miteinander verbundene zweite Behälter B2 nebeneinander vorgesehen sein. Stromabwärts der zweiten Behälter B2 ist ein stationärer Auffangbehälter Ab vorgesehen.

Die Funktion der siebten Vorrichtung ist wie folgt:
Ein zweiter Behälter B2 wird mitlaufend mit dem Laserstrahl L so mitgeführt, dass der Laserstrahl L etwa zentral in den zweiten Behälter B2 eintritt. Schneidstaub Ss wird durch die Wirkung eines mittels Düsen 22 erzeugten Flüssigkeitssprays abgekühlt und anschließend dem Auffangbehälter Ab zugeführt. Falls mehrere zweite Behälter B2 vorgesehen sind, kann im Falle der Verstopfung einer der zweiten Behälter B2 auf einen weiteren zweiten Behälter B2 umgestellt werden. D. h. es wird dann der weitere zweite Behälter B2 auf den Laserstrahl L ausgerichtet.

Der zumindest eine zweite Behälter B2 kann - ähnlich wie in Fig. 7 gezeigt - mit einem Saugebläse 19 gekoppelt sein.

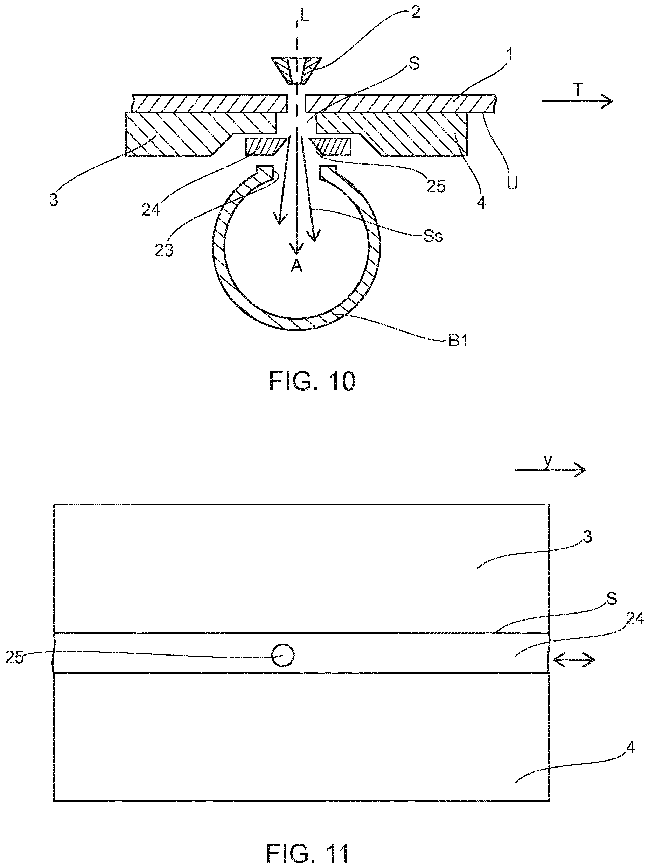

Die Fig. 10 und 11 zeigen eine achte Vorrichtung. Die achte Vorrichtung ist ähnlich der sechsten Vorrichtung ausgestaltet. Den ersten 3 und den zweiten Stützleisten 4 ist in Abführrichtung A ein rohrförmiger erster Behälter B1 nachgeordnet, dessen Achse sich etwa parallel zum Spalt S erstreckt. Der erste Behälter B1 weist eine sich parallel zum Spalt S erstreckende schlitzartige Eintrittsöffnung 23 auf. Mit dem Bezugszeichen 24 ist eine, beispielsweise aus einem Edelstahlband hergestellte, Blende bezeichnet, welche eine Blendenöffnung 25 aufweist. Mit der Blende 24 wird die schlitzartige Eintrittsöffnung 23 des ersten Behälters B1 im Wesentlichen abgedeckt. Die Blende 24 wird mittels einer hier nicht näher dargestellten Bewegungseinrichtung in y-Richtung in Ausrichtung auf den Laserstrahl L hin- und herbewegt. Der erste Behälter B1 sowie die (hier nicht gezeigte) Bewegungseinrichtung und die Blende 24 sind vorteilhafterweise mit einer der beiden Stützleisten 3, 4 verbunden, so dass die andere Stützleiste 3, 4 relativ zur Blende 24 sowie zum ersten Behälter B1 in Transportrichtung hin- und herbewegbar ist.

Bei der achten Vorrichtung kann der Abführschacht weggelassen werden. Ferner ist es zweckmäßig, dass der erste Behälter B1 - ähnlich wie bei der sechsten Vorrichtung - mit einem Sauggebläse 19 (hier nicht gezeigt) gekoppelt ist, so dass eine durch die Blendenöffnung 25 und die schlitzförmige Eintrittsöffnung 23 gerichtete Strömung in das Innere des ersten Behälters B1 erzeugt wird.

Die Funktion der achten Vorrichtung ist Folgende:
Der beim Schneiden mittels des Laserstrahls L erzeugte Schneidstaub Ss wird durch die Wirkung des Sauggebläses durch die Blendenöffnung 25 und die schlitzförmige Eintrittsöffnung 23 ins Innere des ersten Behälters B1 gesaugt. Indem die Blendenöffnung 25 stets in Ausrichtung auf den Laserstrahl L in y-Richtung hin- und herbewegt wird, kann verhindert werden, dass im ersten Behälter B1 bereits aufgenommener Schneidstaub Ss aufgewirbelt, durch die schlitzförmige Eintrittsöffnung 23 aus dem ersten Behälter B1 herausgeschleudert und an der Unterseite U des Blechbands 1 anhaftet.

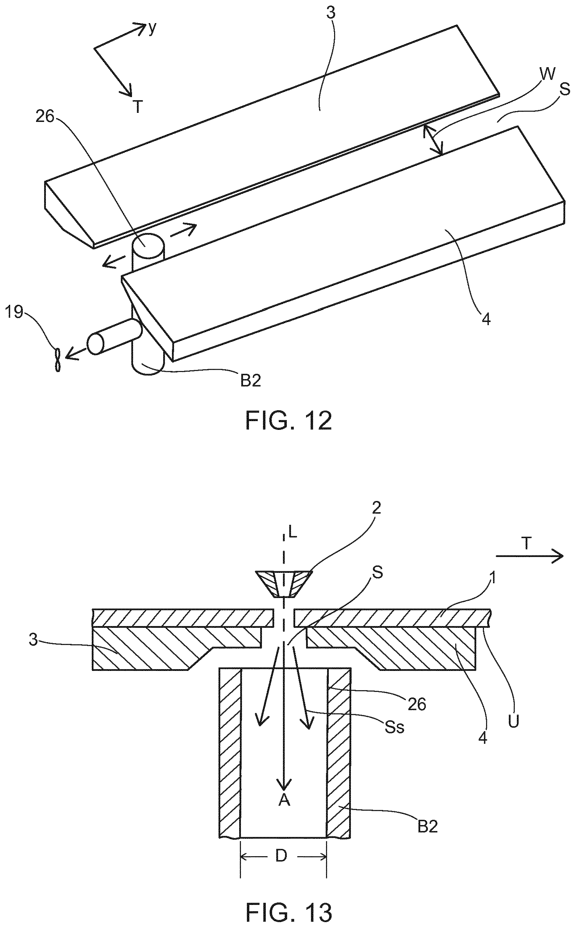

Die Fig. 12 und 13 zeigen eine neunte Vorrichtung. Die neunte Vorrichtung ist ähnlich zur siebten Vorrichtung ausgestaltet. Hier ist allerdings der Abführschacht 9 weggelassen. Der sich mit seiner Achse etwa parallel zum Laserstrahl L erstreckende zweite Behälter B2 ist mit einer (hier nicht gezeigten) Bewegungseinrichtung in y-Richtung hin- und herbewegbar, und zwar so, dass eine weitere Eintrittsöffnung 26 des zweiten Behälters B2 stets in Ausrichtung auf den Laserstrahl L ist. Der zweite Behälter B2 ist zweckmäßigerweise mit einem Sauggebläse 19 verbunden, so dass eine Saugströmung vom Spalt S in Richtung der weiteren Eintrittsöffnung 26 sich ausbildet.

Wie insbesondere aus Fig. 13 ersichtlich ist, ist eine Weite W des Spalts S in Transportrichtung vorteilhafterweise so eingestellt, dass diese kleiner als ein Innendurchmesser D des zweiten Behälters B2 ist.

### Bezugszeichenliste

- 1: Blechband
- 2: Schneiddüse
- 3: erste Stützleiste
- 4: zweite Stützleiste
- 5: erster Bandförderer
- 6: zweiter Bandförderer
- 7: erste Umlenkrolle
- 8: zweite Umlenkrolle
- 9: Abführschacht
- 10a: erste Wand
- 10b: zweite Wand
- 11a: erste Stützfläche
- 11b: zweite Stützfläche
- 12: Belüftungskanal
- 13a, b: Abschnitt
- 13c: Verbindungskanal
- 14a: erster Belüftungsdurchbruch
- 14b: zweiter Belüftungsdurchbruch
- 15: Leitung
- 16: Gebläse
- 17: Schnitt
- 18: Absaugleitung
- 19: Sauggebläse
- 20: Flüssigkeitszuführleitung
- 21: Flüssigkeitsabführleitung
- 22: Düse
- 23: schlitzförmige Eintrittsöffnung
- 24: Blende
- 25: Blendenöffnung
- 26: weitere Eintrittsöffnung
- A: Abführrichtung
- Ab: Auffangbehälter
- B1: erster Behälter
- B2: zweiter Behälter
- D: Innendurchmesser
- F: Flüssigkeit
- L: Laserstrahl
- Lg1: erste Länge
- Lg2: zweite Länge
- O: Oberseite
- y: Querrichtung
- S: Spalt
- Ss: Schneidstaub
- T: Transportrichtung
- U: Unterseite
- W: Weite

## Patentansprüche

1. Vorrichtung zum Schneiden von Blechplatinen aus einem Blechband (1), umfassend:
eine in einer Transportrichtung (T) des Blechbands (1) hin und her bewegbare Laserschneidvorrichtung (2),
eine mitlaufend mit der Laserschneidvorrichtung (2) in Transportrichtung hin und her bewegbare Stützeinrichtung (3, 4) zum Stützen des zu schneidenden Blechbands (1),
wobei die Stützeinrichtung ein erstes Stützmittel mit einer ersten Stützleiste (3) und ein zweites Stützmittel mit einer der ersten Stützleiste (3) gegenüberliegenden zweiten Stützleiste (4) umfasst, wobei die erste (3) und die zweite Stützleiste (4) derart mitlaufend mit der Laserschneidvorrichtung (2) bewegt werden, dass ein Laserstrahl (L) der Laserschneidvorrichtung (2) stets auf einen zwischen der ersten (3) und der zweiten Stützleiste (4) gebildeten Spalt (S) ausgerichtet ist, und
eine in einer von der Laserschneidvorrichtung (2) weg weisenden Abführrichtung (A) den Stützleisten (3, 4) nachgeordnete Staubabführeinrichtung (9),
wobei die Staubabführeinrichtung (9) und/oder zumindest eine Stützleiste (3, 4) mit einer Belüftungseinrichtung (12, 13a, 13b, 13c, 14a, 14b) zur Belüftung des Spalts (S) versehen ist/sind, und
**dadurch gekennzeichnet, dass** die Belüftungseinrichtung (12, 13a, 13b, 13c, 14a, 14b) Belüftungskanäle (12, 13a, 13b, 13c) umfasst, welche in einer der Laserschneideinrichtung (2) zugewandten Stützfläche (11a, 11b) der Stützleiste (3, 4) vorgesehen sind.

2. Vorrichtung nach Anspruch 1, wobei die Belüftungskanäle (12, 13a, 13b, 13c) sich über eine sich in Transportrichtung (T) erstreckende Länge (Lg1) der Stützfläche (11a, 11b) erstrecken.

3. Vorrichtung nach einem der vorhergehenden Ansprüche, wobei die Belüftungskanäle (12, 13a, 13b, 13c) parallel oder schräg zur Transportrichtung (T) verlaufen.

4. Vorrichtung nach einem der vorhergehenden Ansprüche, wobei die Staubabführeinrichtung (9) einen Staubauffangbehälter (B1, B2) und/oder einen sich von zumindest einer der Stützleisten (3, 4) erstreckenden Staubabführschacht umfasst.

5. Vorrichtung nach einem der vorhergehenden Ansprüche, wobei die Belüftungseinrichtung (12, 13a, 13b, 13c, 14a, 14b) Belüftungsdurchbrüche (14a, 14b) umfasst, welche zumindest eine der Stützleisten (3, 4) und/oder den Staubabführschacht (9) und/oder der Staubauffangbehälter (B1, B2) durchgreifen.

6. Vorrichtung nach einem der vorhergehenden Ansprüche, wobei ein Gebläse (16) zum Zuführen von Luft zu den Belüftungskanälen (12, 13a, 13b, 13c) und/oder Belüftungsdurchbrüchen (14a, 14b) vorgesehen ist.

7. Vorrichtung nach einem der Ansprüche 4 bis 6, wobei der Staubabführschacht (9) einen sich in der Abführrichtung (A) erweiternden Querschnitt aufweist.

8. Vorrichtung nach einem der vorhergehenden Ansprüche, wobei die Stützleisten (3, 4) und/oder der Staubabführschacht (9) aus Kupfer oder einer im Wesentlichen Kupfer enthaltenden Legierung hergestellt ist/sind.

9. Vorrichtung nach einem der Ansprüche 4 bis 8, wobei der Staubabführschacht (9) lediglich an einer der beiden Stützleisten (3, 4) angebracht ist.

10. Vorrichtung nach einem der Ansprüche 4 bis 9, wobei der Staubabführschacht (9) durch zwei sich in Abführrichtung (A) ersteckende Wände (10a, 10b) gebildet ist, wobei zumindest eine der Wände (10a, 10b) an einer der Stützleisten (3, 4) angebracht ist.

11. Vorrichtung nach einem der Ansprüche 4 bis 10, wobei im Randbereich des Staubabführschachts (9) mit dem Gebläse (16) verbundene Durchbrüche (14a, 14b) zur Ausbildung eines Luftschwerts vorgesehen sind.

12. Vorrichtung nach einem der vorhergehenden Ansprüche, wobei dem ersten Stützmittel stromaufwärts ein erstes Fördermittel (5, 7) vorgeordnet ist, und wobei dem zweiten Stützmittel stromabwärts ein zweites Fördermittel (6, 8) nachgeordnet ist.

13. Vorrichtung nach einem der vorhergehenden Ansprüche, wobei eine Flüssigkeitszuführeinrichtung (20) zum Zuführen von Flüssigkeit (F) zum Behälterinnenraum vorgesehen ist.

14. Vorrichtung nach einem der Ansprüche 4 bis 13, wobei die Eintrittsöffnung des Staubauffanqbehälters (B1) schlitzförmig ausgebildet ist und sich senkrecht zur Transportrichtung (T) erstreckt.

15. Vorrichtung nach Anspruch 14, wobei eine sich senkrecht zur Transportrichtung (T) ersteckende Blende mit einer auf die schlitzförmige Eintrittsöffnung ausgerichteten Blendenöffnung vorgesehen ist, welche mittels einer Bewegungseinrichtung in Ausrichtung auf den Laserstrahl senkrecht zur Transportrichtung (T) hin- und herbewegbar ist.

## Claims

1. An apparatus for cutting metal plates out of a metal strip (1), comprising:
a laser cutting apparatus (2) that is movable back and forth in a transport direction (T) of the metal strip (1);
a support device (3, 4) for supporting the metal strip (1) to be cut, said support device (3, 4) being movable back and forth in the transport direction concurrently with the laser cutting apparatus (2);
wherein the support device comprises first support means having a first support strip (3) and second support means having a second support strip (4) located opposite the first support strip (3), wherein the first (3) and the second support strip (4) are moved concurrently with the laser cutting apparatus (2) such that a laser beam (L) of the laser cutting apparatus (2) is always oriented towards a gap (S) formed between the first (3) and the second support strip (4); and
a dust discharging device (9) arranged downstream of the support strips (3, 4) in a discharging direction (A) directed away from the laser cutting apparatus (2);
wherein the dust discharge shaft (9) and/or at least one support strip (3, 4) is/are provided with a ventilation device (12, 13a, 13b, 13c, 14a, 14b) for ventilating the gap (S),
**characterized in that**
the ventilation device (12, 13a, 13b, 13c, 14a, 14b) comprises ventilation channels (12, 13a, 13b, 13c) that are provided in a support surface (11a, 11b) of the support strip (3, 4), the support surface facing the laser cutting apparatus (2).

2. An apparatus according to claim 1, wherein the ventilation channels (12, 13a, 13b, 13c) extend over a length (Lg1) of the support surface (11a, 11b) extending in the transport direction (T).

3. An apparatus according to one of the preceding claims, wherein the ventilation channels (12, 13a, 13b, 13c) run parallel or at an angle to the transport direction (T).

4. An apparatus according to any one of the preceding claims, wherein the dust discharging device (9) comprises a dust collection container (B1, B2) and/or a dust discharge shaft extending from at least one of the support strips (3, 4).

5. An apparatus according to any one of the preceding claims, wherein the ventilation device (12, 13a, 13b, 13c, 14a, 14b) comprises ventilation passages (14a, 14b), which reach through at least one of the support strips (3, 4) and/or the dust discharge shaft (9) and/or the dust collection container (B1, B2).

6. An apparatus according to any one of the preceding claims, wherein a fan (16) is provided to supply air to the ventilation channels (12, 13a, 13b, 13c) and/or ventilation passages (14a, 14b).

7. An apparatus according to any one of claims 4 through 6, wherein the dust discharge shaft (9) has a cross section that widens in the discharging direction (A).

8. An apparatus according to any one of the preceding claims, wherein the support strips (3, 4) and/or the dust discharge shaft (9) is/are made of copper or of another essentially copper-containing alloy.

9. An apparatus according to any one of claims 4 through 8, wherein the dust discharge shaft (9) is attached to only one of the two support strips (3, 4).

10. An apparatus according to any one of claims 4 through 9, wherein the dust discharge shaft (9) is formed by two walls (10a, 10b) extending in the discharging direction (A), at least one of the walls (10a, 10b) being attached to one of the support strips (3, 4).

11. An apparatus according to any one of claims 4 through 10, wherein in the edge area of the dust discharging channel (9) passages (14a, 14b) connected with the fan (16) are provided to form an air knife.

12. An apparatus according to any one of the preceding claims, wherein first means of conveyance (5, 7) are arranged upstream of the first support means, and wherein second means of conveyance (6, 8) are arranged downstream of the second support means.

13. An apparatus according to any one of the preceding claims, wherein a liquid supply device (20) is provided to supply liquid (F) to the interior of the container.

14. An apparatus according to any one of claims 4 through 13, wherein the intake opening of the dust collection container (B1) is slot-shaped and extends perpendicular to the transport direction in the y-direction.

15. An apparatus according to claim 14, wherein a mask extending perpendicular to the transport direction in y-direction is provided with a mask opening that is aligned with the slot-shaped intake opening and that can be moved back and forth perpendicular to the transport direction in the y-direction in alignment with the laser beam by means of a movement device.

## Revendications

1. Dispositif de coupe de flans de tôle dans une bande de tôle (1) comprenant :
un dispositif de coupe au laser (2) pouvant effectuer un déplacement en va-et-vient dans un sens de transport (T) de la bande de tôle (1),
un dispositif de support (3, 4) pouvant effectuer un déplacement en va-et-vient dans le sens de transport de concert avec le dispositif de coupe au laser (2) et servant de support à la bande de tôle à couper (1),
en ce que le dispositif de support comporte un premier moyen de support muni d'une première baguette de support (3) et un second moyen de support muni d'une seconde baguette de support (4) opposée à la première baguette de support (3), en ce que la première (3) et la seconde baguette de support (4) sont déplacées de concert avec le dispositif de coupe au laser (2) de telle manière qu'un faisceau laser (L) du dispositif de coupe au laser (2) est toujours orienté sur un interstice (S) formé entre la première (3) et la seconde baguette de support (4), et
un dispositif d'évacuation de la poussière (9) disposé en aval des baguettes de support (3, 4) dans un sens d'évacuation (A) s'éloignant du dispositif de coupe au laser (2),
en ce que le dispositif d'évacuation de la poussière (9) et/ou au moins une baguette de support (3, 4) est/sont muni(s) d'un dispositif de ventilation (12, 13a, 13b, 13c, 14a, 14b) servant à ventiler l'interstice (S), et
**caractérisé en ce que**
le dispositif de ventilation (12, 13a, 13b, 13c, 14a, 14b) comporte des canaux de ventilation (12, 13a, 13b, 13c) qui sont prévus dans une surface d'appui (11a, 11b) de la baguette de support (3, 4), ladite surface d'appui étant orientée vers le dispositif de coupe au laser (2).

2. Dispositif selon la revendication 1, en ce que les canaux de ventilation (12, 13a, 13b, 13c) s'étendent sur une longueur (Lg1) s'étendant dans le sens de transport (T) de la surface d'appui (11a, 11b).

3. Dispositif selon l'une des revendications précédentes, en ce que les canaux de ventilation (12, 13a, 13b, 13c) s'étendent parallèlement ou de manière inclinée par rapport au sens de transport (T).

4. Dispositif selon l'une des revendications précédentes, en ce que le dispositif d'évacuation de la poussière (9) comporte un collecteur de poussière (B1, B2) et/ou un puits d'évacuation de la poussière s'étendant à partir d'au moins une des baguettes de support (3, 4).

5. Dispositif selon l'une des revendications précédentes, en ce que le dispositif de ventilation (12, 13a, 13b, 13c, 14a, 14b) comporte des conduits de ventilation (14a, 14b) qui traversent au moins une des baguettes de support (3, 4) et/ou le puits d'évacuation de la poussière (9) et/ou le collecteur de poussière (B1, B2).

6. Dispositif selon l'une des revendications précédentes, en ce qu'une soufflante (16) servant à l'alimentation en air des canaux de ventilation (12, 13a, 13b, 13c) et/ou des conduits de ventilation (14a, 14b) est prévue.

7. Dispositif selon l'une des revendications 4 à 6, en ce que le puits d'évacuation de la poussière (9) présente une section transversale s'élargissant dans le sens d'évacuation (A).

8. Dispositif selon l'une des revendications précédentes, en ce que les baguettes de support (3, 4) et/ou le puits d'évacuation de la poussière (9) est/sont réalisé(s) en cuivre ou en un alliage contenant principalement du cuivre.

9. Dispositif selon l'une des revendications 4 à 8, en ce que le dispositif d'évacuation de la poussière (9) n'est monté que sur l'une des deux baguettes de support (3, 4).

10. Dispositif selon l'une des revendications 4 à 9, en ce que le puits d'évacuation de la poussière (9) est formé par deux parois (10a, 10b) s'étendant dans le sens d'évacuation (A), en ce qu'au moins l'une des parois (10a, 10b) est montée sur l'une des baguettes de support (3, 4).

11. Dispositif selon l'une des revendications 4 à 10, en ce que des conduits (14a, 14b) reliés dans la zone périphérique du puits d'évacuation de la poussière (9) à la soufflante (16) sont prévus pour la formation d'une lame d'air.

12. Dispositif selon l'une des revendications précédentes, en ce qu'un premier moyen de transport (5, 7) est disposé en amont du premier moyen de support, et en ce que un second moyen de transport (6, 8) est disposé en aval du second moyen de support.

13. Dispositif selon l'une des revendications précédentes, en ce qu'un dispositif d'alimentation en liquide (20) servant à amener du liquide (F) à l'intérieur du contenant est prévu.

14. Dispositif selon l'une des revendications 4 à 13, en ce que l'orifice d'admission du collecteur de poussière (B1) est réalisé sous forme de fente et s'étend perpendiculairement au sens de transport (T).

15. Dispositif selon la revendication 14, en ce qu'un capot s'étendant perpendiculairement au sens de transport (T) d'une ouverture de capot alignée sur l'orifice d'admission en forme de fente est prévu, ledit capot pouvant effectuer un déplacement en va-et-vient perpendiculaire au sens de transport (T) au moyen d'un dispositif de déplacement orienté sur le faisceau laser.
